# FASCICULE DE BREVET EUROPEEN

(11) **EP 0 867 108 B1**
(45) Date de publication et mention de la délivrance du brevet: **05.07.2000**
(21) Numéro de dépôt: 98420039.4
(22) Date de dépôt: 04.03.1998
(51) Int. Cl.: A01D 34/73

(54) **Fil de coupe composite pour débroussailleuses et taille-bordures**
Fasenschneider für Buschmäher und Kantentrimmer
Cutting wire for brushcutters and edge trimmers

(30) Priorité: 14.03.1997 FR 9703371
(43) Date de publication de la demande: 30.09.1998
(73) Titulaire: Speed France, 69400 Villefranche Sur Saône (FR)
(72) Inventeur: Legrand, Emmanuel, 01480 Villeneuve (FR)
(74) Mandataire: Bratel, Gérard

(56) Documents cités:
- WO-A-97/19584
- DE-C- 4 005 879
- DE-C- 4 321 650
- JP-A- 6 205 607
- US-A- 4 054 993
- US-A- 4 186 239
- US-A- 5 313 770
- DATABASE WPI Section Ch, Week 8816 Derwent Publications Ltd., London, GB; Class A23, AN 88-109970 XP002045232 & JP 63 059 812 A (TORAY MONOFILAMENT CO) , 15 mars 1988
- PATENT ABSTRACTS OF JAPAN vol. 018, no. 242 (C-1197), 10 mai 1994 & JP 06 030627 A (KOMATSU ZENOAH CO), 8 février 1994,
- PATENT ABSTRACTS OF JAPAN vol. 016, no. 544 (C-1004), 13 novembre 1992 & JP 04 207110 A (HITACHI KOKI CO LTD), 29 juillet 1992,
- PATENT ABSTRACTS OF JAPAN vol. 016, no. 320 (C-0962), 14 juillet 1992 & JP 04 091715 A (YAMAHA MOTOR CO LTD), 25 mars 1992,

## Description

La présente invention concerne les fils de coupe destinés à tailler et couper la végétation, utilisables sur des appareils de motoculture à tête rotative communément appelés débroussailleuses et taille-bordures.

Ces appareils sont équipés généralement d'un moteur thermique ou électrique qui entraîne en rotation, à une vitesse élevée pouvant être comprise entre environ 3000 tours/minute et 12000 tours/minute, une tête tournante supportant un ou plusieurs fils de coupe. Au cours de la rotation de la tête, et sous l'effet de la force centrifuge, le ou les fils de coupe se déploient radialement et balayent ainsi une certaine zone circulaire, à l'intérieur de laquelle ils exercent un effet tranchant sur la végétation rencontrée.

Les fils de coupe couramment fabriqués et commercialisés, destinés à une telle utilisation, sont des monofilaments lisses, le plus souvent du type "monomatière", qui ont par conséquent les qualités et les faiblesses de la matière première utilisée pour les réaliser.

Les matières premières les plus fréquemment utilisées pour la réalisation des fils de coupe sont des matières synthétiques, et plus particulièrement le polyamide 6, le copolyamide 6/66 et le copolyamide 6/12. Ces matières peuvent être très légèrement modifiées ou chargées, pour améliorer leurs caractéristiques de base. Ces matières sont toujours extrudées sous forme de monofilaments pouvant avoir des diamètres et des sections variées, en particulier une section ronde, mais aussi des profils polygonaux ou en étoile (comme montré par exemple dans le document JP-A-06205607). Dans tous les cas, et même s'ils possèdent des arêtes, ces monofilaments conservent un aspect de surface lisse, c'est-à-dire sans aspérités de très petites dimensions.

Les fils de coupe actuellement fabriqués constituent donc de bons compromis, mais leurs caractéristiques et performances restent limitées par les matières premières utilisées et par leur mode de fabrication par extrusion, qui conduit inévitablement à un aspect de surface lisse et régulier.

Les défauts et insuffisances de tels fils de coupe sont, en particulier, les suivants :

Ces fils de coupe lisses engendrent, en cours d'utilisation, d'importantes turbulences dans l'air qui provoquent un bruit élevé et désagréable, perçu comme un sifflement strident, s'ajoutant au bruit du moteur d'entraînement de la tête rotative. Ces bruits entraînent une pollution sonore, d'autant plus nuisible que, par leur nature même, les débroussailleuses et taille-bordures sont utilisées en milieu extérieur. Des prescriptions réglementaires, visant à limiter le bruit de ces appareils à un niveau acceptable, sont d'ailleurs en cours d'élaboration et devront être prochainement respectées.

L'effet coupant des fils de coupe actuels est uniquement dû aux chocs produits, sur la végétation rencontrée, par leur rotation à grande vitesse. Cet effet peut être insuffisant, selon le type de végétation rencontré.

Un autre inconvénient est le phénomène de collage. Certains appareils puissants sollicitent considérablement le fil de coupe à l'intérieur de leur tête rotative, en raison des vibrations et des tensions du fil dues à la rotation de ladite tête à une très grande vitesse, pouvant atteindre 12000 tours/minute. Il en résulte une importante montée en température, très proche du point de fusion des fils de coupe lisses traditionnels (de 200 à 222° C), et cette montée en température va jusqu'à provoquer un collage des spires de fil enroulées sur la bobine logée dans la tête rotative.

Un autre phénomène constaté est la "casse à l'oeillet" : un fil de coupe lisse traditionnel, trop sollicité, finira par casser au niveau de l'oeillet, par lequel le fil sort de la tête rotative. En effet, par suite d'efforts mécaniques de flexion répétés, le fil s'échauffe à la sortie de l'oeillet de la tête. La montée en température progressive du fil engendre, à cet endroit, une boursouflure importante qui devient rapidement un point de fragilité, provoquant un départ de rupture du fil ; il s'ensuit alors une casse du fil lisse.

Enfin, le fil de coupe traditionnel en polyamide n'est pratiquement pas dégradable dans l'environnement, après utilisation, et l'on estime à 10000 tonnes la quantité de fil de coupe, fragmenté ou effrité, qui est dispersée chaque année sur l'ensemble de la terre. Un certain nombre de dispositions européennes en matière de protection de l'environnement visent à limiter la pollution résultant de la casse, de l'effritement ou de la fragmentation des monofilaments synthétiques, pendant leur utilisation, mais les fils actuels ne sont pas encore de nature à satisfaire ces exigences réglementaires.

Au-delà des fils de coupe traditionnels, on connaît déjà des fils spéciaux, qui visent notamment à réduire le bruit de fonctionnement, par exemple des fils de forme ondulée (voir document WO-A-9719584) et des fils pourvus de saillies ou rainures hélicoïdales (voir document DE-C-4005879). Ces fils de coupe restent réalisés en un seule matière, et ils n'évitent pas les autres inconvénients exposés ci-dessus.

On connaît aussi quelques fils de coupe composites, constitués par une âme de type monofilament ou multifilament, enrobée d'un revêtement, l'âme et le revêtement étant réalisés dans des matières distinctes. A ce sujet, peuvent être cités les documents JP-A-63059812, JP-A-06030627, US-A-5313770, JP-A-04207110 et DE-C-4321650. Tous ces fils composites conservent toutefois un aspect de surface lisse, ou indéfini et supposé lisse, et ils ne peuvent résoudre l'ensemble des problèmes à la base de la présente invention.

La présente invention vise à éliminer l'ensemble des inconvénients précédemment exposés, en fournissant un fil de coupe perfectionné, qui procure en particulier à la fois une réduction des nuisances sonores, une amélioration de l'effet coupant, et une suppression des problèmes de collage et de casse à l'oeillet, tout en favorisant sa dégradabilité.

A cet effet, l'invention a pour objet un fil de coupe composite pour débroussailleuses et taille-bordures, à tête rotative, le fil étant de façon connue constitué par une âme, de type monofilament, enrobée d'un revêtement, et ce fil étant caractérisé en ce qu'il possède un revêtement granuleux, donnant à ce fil de coupe un aspect de surface irrégulier et/ou rugueux.

Ainsi, l'invention propose un fil de coupe qui peut être désigné comme un fil composite, regroupant une âme et un revêtement, lui-même composé d'un ou de plusieurs constituants, le revêtement étant spécifique par sa structure granuleuse et l'aspect de surface qui en résulte.

L'âme de ce fil de coupe est réalisable notamment en matière synthétique extrudée puis étirée, telle que polyamide, à la manière des monofilaments traditionnels qui ont fait leurs preuves dans ce domaine depuis longtemps. Cette âme procure au fil de coupe les caractéristiques recherchées de souplesse et de ténacité, résultant de sa composition chimique, de ses dimensions et de son procédé de fabrication. L'âme peut posséder divers profils ; cette âme peut ainsi présenter une section ronde, qui est la forme la plus simple, mais elle peut aussi posséder un profil en étoile ou dentelé, qui a pour avantage d'augmenter la surface d'adhésion du revêtement granuleux, et d'améliorer l'accrochage de ce dernier sur l'âme. Les mêmes résultats sont aussi obtenus, dans une variante, en prévoyant sur l'âme des conformations, telles que marquages, qui se répètent dans le sens de la longueur du fil de coupe.

Quant au revêtement granuleux, fixé sur l'âme et la recouvrant entièrement, celui-ci peut être constitué de particules minérales, végétales, métalliques ou synthétiques, donnant dans tous les cas au produit final un aspect de surface irrégulier et/ou rugueux. Des particules minérales, telles que des particules de silice, de verre, de sable fin, d'émeri, de marbre, etc... sont plus particulièrement avantageuses, pour augmenter le pouvoir abrasif du fil de coupe, ainsi que ses qualités thermiques. La nature et la granulométrie des particules formant le revêtement permettent de remédier aux faiblesses des fils de coupe lisses traditionnels, sous divers aspects :

En premier lieu, la rugosité de surface du fil de coupe permet une meilleure fluidité de rotation du fil dans l'air, les aspérités du fil fragmentant les importantes turbulences créées par un fil de coupe lisse traditionnel. Il en résulte, d'une part, une forte baisse du niveau sonore engendré par la rotation du fil dans l'air ; ainsi, les essais effectués par le Demandeur ont permis d'enregistrer, à diamètre de fil égal et à vitesse égale, des réductions de bruit de 8 à 12 décibels, en fonction de la granulométrie du revêtement et, par conséquent, de l'importance du relief présent à la surface du fil. L'élimination des turbulences procure, d'autre part, une diminution non négligeable du besoin d'énergie nécessaire au maintien en rotation du fil, à une vitesse donnée ; les essais effectués par le Demandeur ont ainsi permis de mesurer, à diamètre de fil égal, un gain de 3 à 7% sur la consommation d'énergie nécessaire au maintien en rotation du fil de coupe.

Grâce aux aspérités de son revêtement, le fil de coupe objet de l'invention crée aussi, en cours d'utilisation, un effet de "scie" qui vient s'ajouter à l'effet coupant dû au choc produit par la rotation à grande vitesse de ce fil, et la combinaison de cet effet abrasif avec l'effet du choc renforce particulièrement les qualités de coupe du fil. Le pouvoir abrasif du fil de coupe est plus ou moins augmenté, selon la nature et la granulométrie du revêtement. Des particules minérales telles que les particules de silice, de verre, de sable, d'émeri, de marbre, etc... sont à ce sujet particulièrement avantageuses, mais des résultats intéressants peuvent aussi être obtenus avec des particules métalliques, telles que des particules de zinc, de fer, d'aluminium, notamment sous forme d'oxyde en poudre d'une granulométrie conséquente. Il est aussi possible d'utiliser, pour la réalisation du revêtement, des particules en matières synthétiques choisies parmi celles ayant un excellent comportement à l'abrasion, telles que les élastomères et les polyamides 11 en poudre. L'utilisation d'un revêtement en matière synthétique apparaît aussi avantageuse pour la réduction du bruit et pour l'augmentation de la durée de vie du fil de coupe, l'élasticité d'un tel revêtement offrant une première couche d'usure, avant attaque de l'âme du fil. Une combinaison de deux ou plusieurs des matières sous forme de particules, précédemment citées, peut être envisagée.

La nature du revêtement, et l'aspect de surface granuleux du fil de coupe selon l'invention, permettent aussi une élimination complète du problème de collage des spires à l'intérieur de la tête tournante. En particulier, certaines particules telles que des particules de silice ou de verre sont préconisées à cet effet, car les températures atteintes à l'intérieur de la tête, quoiqu'élevées, ne permettent pas d'approcher le point de collage ou de fusion de ces particules. De plus, l'aspect de surface granuleux augmente considérablement la surface d'échange thermique et favorise donc le refroidissement du fil de coupe. La conjugaison de ces deux effets permet l'élimination totale du phénomène de collage dans la tête en rotation.

L'aspect de surface granuleux du fil de coupe selon l'invention augmente aussi considérablement la surface d'échange thermique au niveau de la sortie du fil hors de la tête tournante, et il en résulte également une nette diminution, voire une suppression complète du phénomène de casse à l'oeillet.

Enfin, pour un fil de coupe de diamètre et de masse données, la conception objet de l'invention permet de réduire la quantité de polyamide, en la limitant à la seule âme du fil, laquelle peut être de faible diamètre, et de choisir pour le revêtement des matériaux naturels, ou facilement dégradables par eux-mêmes, ou encore des matériaux dont la présence peut accélérer la dégradation de l'ensemble "âme + revêtement", par restriction de la stabilité chimique de ce complexe. Ainsi, le fil de coupe composite, objet de l'invention, contribue à la protection de l'environnement.

Par ailleurs, on notera qu'un tel fil de coupe peut être obtenu industriellement d'une manière rationnelle et économique, le revêtement granuleux pouvant être appliqué autour de l'âme par un procédé de co-extrusion, d'enduction ou de trempage, mis en oeuvre en continu. En particulier, le procédé d'obtention du fil de coupe peut consister, sur un fil d'âme défilant en continu, en une enduction avec un agent d'adhérence, puis un poudrage des particules destinées à former le revêtement granuleux, et enfin une cuisson fixant définitivement ce revêtement sur le fil d'âme.

L'invention sera mieux comprise à l'aide de la description qui suit, en référence au dessin schématique annexé représentant, à titre d'exemples, quelques formes de réalisation de ce fil de coupe composite pour débroussailleuses et taille-bordures :
Figure 1 est une vue en perspective d'un tronçon de fil de coupe conforme à la présente invention ;
Figure 2 est une vue en perspective d'un autre tronçon de fil de coupe, constituant une variante du précédent ;
Figure 3 est un schéma illustrant la fragmentation des turbulences de l'air, obtenue grâce au fil de coupe objet de l'invention ;
Figure 4 est un autre schéma illustrant, à titre comparatif, les turbulences créés par un fil de coupe traditionnel ;
Figure 5 est un schéma de principe d'un procédé, et de l'installation correspondante, pour la fabrication d'un fil de coupe composite selon l'invention.

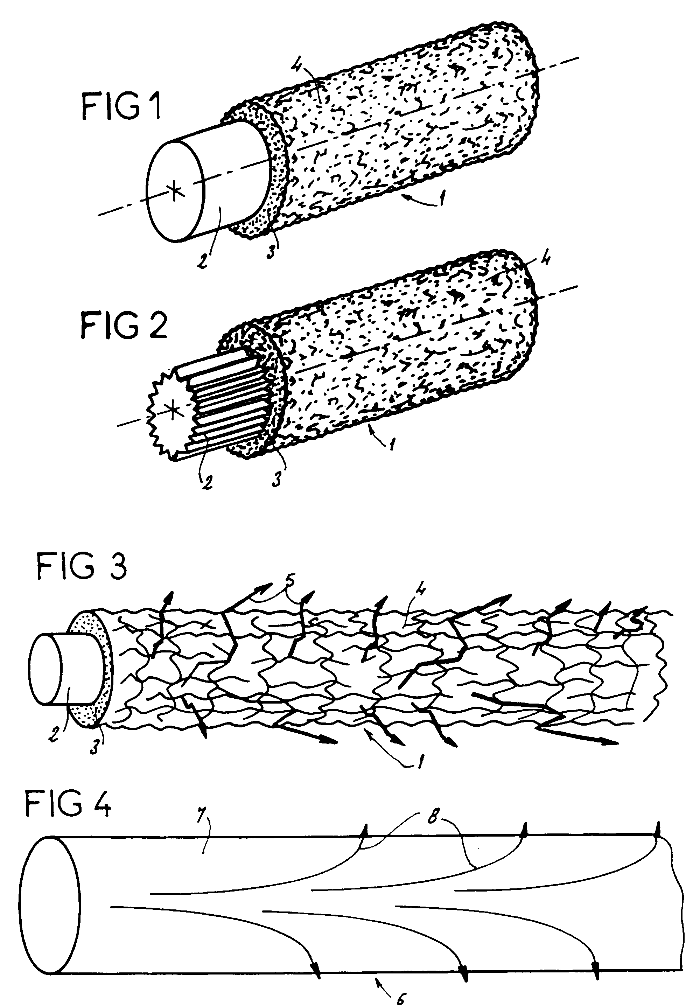

La figure 1 montre un court tronçon d'un fil de coupe 1, pour débroussailleuses ou taille-bordures, en faisant apparaître la section de ce fil. Le fil de coupe 1 se compose d'un fil d'âme 2, ici de section ronde, qui est enrobé de toutes parts d'un revêtement granuleux 3, de section globalement annulaire, conférant à ce fil 1 une surface extérieure irrégulière et/ou rugueuse 4. Le fil d'âme 2 est par exemple un fil en polyamide, semblable à un monofilament traditionnel. Le revêtement granuleux 3, formant la "peau" du fil de coupe 1, peut être constitué de particules minérales, végétales, métalliques ou synthétiques; des particules minérales de silice, de verre ou de sable sont notamment utilisables.

La figure 2 montre un court tronçon de fil de coupe 1, constituant une variante du précédent. Le fil d'âme 2 présente ici une section en étoile ou dentelée, qui augmente la surface d'adhésion du revêtement granuleux 3.

Au cours de l'utilisation d'un tel fil de coupe 1, celui-ci est entraîné en rotation à grande vitesse, en créant dans l'air environnant des turbulences. Le revêtement granuleux 3, formant la surface irrégulière et/ou rugueuse 4, provoque une fragmentation de ces turbulences, comme indiqué par les flèches 5 de la figure 3. Il en résulte notamment une réduction du bruit, en comparaison avec un fil de coupe traditionnel 6, tel que montré sur la figure 4, qui possède une surface extérieure lisse 7 créant dans l'air des turbulences importantes, telles que suggérées par les flèches 8.

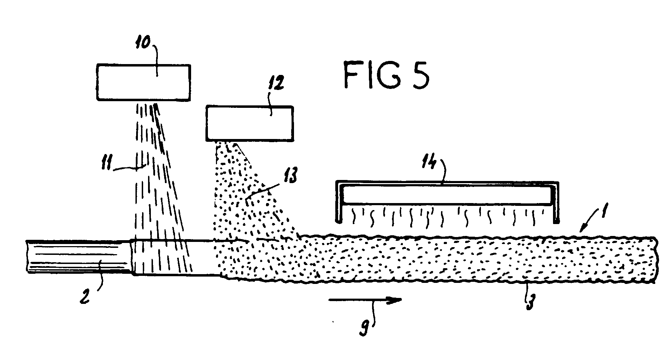

La figure 5 illustre l'obtention du fil de coupe 1 précédemment décrit, selon un procédé particulier. Le fil d'âme 2, préalablement fabriqué notamment par extrusion, défile en continu selon la flèche 9. Sur le fil d'âme 2 est effectuée, par un dispositif de projection ou d'application approprié 10, une enduction avec un agent d'adhérence 11. Ensuite, un dispositif de poudrage 12 projette sur le fil d'âme 2 des particules 13 destinées à former le revêtement granuleux, ces particules se trouvant alors retenues sur le fil d'âme 2 grâce à l'enduction précédemment réalisée. L'ensemble traverse enfin un poste de cuisson 14, qui fixe définitivement le revêtement 3, formé des particules 13, sur le fil d'âme 2, de manière à obtenir à la sortie le fil de coupe composite 1. Ce fil 1 peut être finalement enroulé autour d'une bobine réceptrice, non représentée.

L'on ne s'éloignerait pas du cadre de l'invention en modifiant la matière du fil d'âme, ou sa section, ou en utilisant des particules d'une autre nature et de granulométries diverses pour former le revêtement, ou encore en appliquant et fixant ce revêtement sur le fil d'âme par d'autres procédés que celui décrit.

## Revendications

1. Fil de coupe composite pour débroussailleuses et taille-bordures, à tête rotative, le fil (1) étant constitué par une âme (2), de type monofilament, enrobée d'un revêtement (3), caractérisé en ce qu'il possède un revêtement granuleux (3), donnant à ce fil de coupe (1) un aspect de surface (4) irrégulier et/ou rugueux.

2. Fil de coupe composite selon la revendication 1, caractérisé en ce que son âme (2) est réalisée en matière synthétique, telle que polyamide.

3. Fil de coupe composite selon la revendication 1 ou 2, caractérisé en ce que son âme (2) présente une section ronde (figure 1).

4. Fil de coupe composite selon la revendication 1 ou 2, caractérisé en ce que son âme (2) possède un profil en étoile ou dentelé (figure 2).

5. Fil de coupe composite selon, la revendication 1 ou 2, caractérisé en ce que sont prévues, sur son âme (2), des conformations telles que marquages, qui se répètent dans le sens de la longueur du fil de coupe (1).

6. Fil de coupe composite selon l'une quelconque des revendications 1 à 5, caractérisé en ce que son revêtement granuleux (3) est constitué de particules minérales, telles que des particules de silice, de verre, de sable fin, d'émeri ou de marbre.

7. Fil de coupe selon l'une quelconque des revendications 1 à 5, caractérisé en ce que son revêtement granuleux (3) est constitué de particules métalliques, telles que des particules de zinc, de fer, d'aluminium, notamment sous forme d'oxyde en poudre.

8. Fil de coupe composite selon l'une quelconque des revendications 1 à 5, caractérisé en ce que son revêtement granuleux (3) est constitué de particules en matières synthétiques ayant un excellent comportement à l'abrasion, telles que les élastomères et les polyamides 11 en poudre.

9. Fil de coupe composite selon l'une quelconque des revendications 1 à 8, caractérisé en ce que le revêtement granuleux (3) est appliqué autour de l'âme (2) par un procédé de co-extrusion, d'enduction ou de trempage, mis en oeuvre de façon continue.

10. Fil de coupe composite selon la revendication 9, caractérisé en ce qu'il est obtenu en procédant, sur un fil d'âme (2) défilant en continu (flèche 9), à une enduction avec un agent d'adhérence (11), puis un poudrage des particules (13) destinées à former le revêtement granuleux (3), et enfin une cuisson (en 14) fixant définitivement ce revêtement (3) sur le fil d'âme (2).

## Patentansprüche

1. Fasenschneider für Buschmäher und Kantentrimmer mit rotierendem Kopf, wobei der Fasenschneider (1) gebildet wird durch einen Kern (2) vom Typ Monofilament, der mit einem Überzug (3) beschichtet ist, dadurch gekennzeichnet, daß er einen körnigen Überzug (3) besitzt, der diesem Fasenschneider (1) eine unregelmäßige und/oder rauhe Beschaffenheit der Oberfläche (4) verleiht.

2. Fasenschneider nach Anspruch 1, dadurch gekennzeichnet, daß sein Kern (2) aus synthetischem Material, wie z.B. Polyamid, hergestellt ist.

3. Fasenschneider nach Anspruch 1 oder 2, dadurch gekennzeichnet, daß sein Kern (2) einen runden Querschnitt besitzt (Figur 1).

4. Fasenschneider nach Anspruch 1 oder 2, dadurch gekennzeichnet, daß sein Kern (2) ein sternförmiges oder gezähntes Profil besitzt (Figur 2).

5. Fasenschneider nach Anspruch 1 oder 2, dadurch gekennzeichnet, daß auf seinem Kern (2) Ausbildungen wie z.B. Markierungen vorgesehen sind, die sich in der Richtung der Länge des Fasenschneiders (1) wiederholen.

6. Fasenschneider nach einem beliebigen der Ansprüche 1 bis 5, dadurch gekennzeichnet, daß sein körniger Überzug (3) aus mineralischen Partikeln, wie z.B. Partikeln aus Kieselerde, Glas, feinem Sand, Schmirgel oder Marmor, gebildet wird.

7. Fasenschneider nach einem beliebigen der Ansprüche 1 bis 5, dadurch gekennzeichnet, daß sein körniger Überzug (3) aus metallischen Partikeln, wie z.B. Partikeln aus Zink, Eisen, Aluminium, insbesondere in Form eines pulverförmigen Oxids, gebildet wird.

8. Fasenschneider nach einem beliebigen der Ansprüche 1 bis 5, dadurch gekennzeichnet, daß sein körniger Überzug (3) aus Partikeln aus synthetischen Materialien, die ein ausgezeichnetes Abriebverhalten aufweisen, wie. z.B. pulverförmigen Elastomeren und Polyamiden 11, gebildet wird.

9. Fasenschneider nach einem beliebigen der Ansprüche 1 bis 8, dadurch gekennzeichnet, daß der körnige Überzug (3) durch ein kontinuierlich eingesetztes Koextrusions-, Beschichtungs- oder Tauchverfahren um den Kern (2) herum angebracht wird.

10. Fasenschneider nach Anspruch 9, dadurch gekennzeichnet, daß er hergestellt wird, indem der kontinuierlich (Pfeil 9) durchlaufende Kern (2) mit einem Haftmittel (11) beschichtet wird, dann mit den Partikeln (13), die dazu bestimmt sind, den körnigen Überzug (3) zu bilden, bestäubt wird und schließlich (bei 14) gebrannt wird, wodurch dieser Überzug (3) endgültig auf dem Kern (2) fixiert wird.

## Claims

1. A cutting line for rotary-head brush cutters and edge trimmers, the line (1) consisting of a core (2) of the monofilament type wich is coated with a coating (3), characterized in that it has a granular coating (3), giving the cutting line (1) an uneven and/or rough surface appareance (4).

2. The composite cutting line as claimed in claim 1, wherein its core (3) is made of a synthetic substance such as polyamide.

3. The composite cutting line as claimed in claim 1 or 2, wherein its core (2) has a round cross section (figure 1).

4. The composite cutting line as claimed in claim 1 or 2, wherein its core (2) has a star-shaped or jagged profile (figure 2).

5. The composite cutting line as claimed in claim 1 or 2, wherein shapings, such as markings, which are repeated in the direction of the length of the cutting line (1) are provided on its core (2).

6. The composite cutting line as claimed in any of claims 1 to 5, wherein its granular coating (3) consists of inorganic particles, such as particles of silica, glass, fine sand, emery or marble.

7. The cutting line as claimed in any of claims 1 to 5, wherein its granular coating (3) consists of metal particles, such as particles of zinc, of iron, of aluminum, especially in the form of powdered oxides.

8. The composite cutting line as claimed in any of claims 1 to 5, wherein its granular coating (3) consists of particules of synthetic substances which have excellent abrasion behaviour, such as powdered elastomers and polyamide 11.

9. The composite cutting line as claimed in any of claims 1 to 8, wherein the granular coating (3) is applied around the core (2) by a coextrusion, coating or dipping process employed continuously.

10. The composite cutting line as claimed in claim 9, which is obtained by coating a continuously-traveling (arrow 9) core filament (2) with an adhesive agent (11), then dusting it with particles (13) intended to form the granular coating (3), then finally baking it (at 14) to fix this coating (3) definitively on the core filament (2).
